# EUROPÄISCHE PATENTANMELDUNG

(11) **EP 2 182 034 A1**
(43) Veröffentlichungstag der Anmeldung: **05.05.2010**
(21) Anmeldenummer: 09174075.3
(22) Anmeldetag: 26.10.2009
(51) Int. Cl.: C09D 5/00, C08J 7/04, B05D 7/00, E01C 9/04

(54) **Verfahren zum Aufbringen einer Fahrbahnmarkierung**

(30) Priorität: 29.10.2008 DE 102008053656
(71) Anmelder: Gummiwerk Kraiburg Elastik GmbH, 84529 Tittmoning (DE)
(72) Erfinder: Molter, Willy, 84489, Burghausen (DE); Sinzinger, Manfred, 83308, Trostberg (DE); Namberger, Thomas, 84550, Feichten/Alz (DE); Binh, Vo Van, 84489, Burghausen (DE)
(74) Vertreter: Ruttensperger, Bernhard

(57) **Zusammenfassung**

Ein Verfahren zum Aufbringen einer Fahrbahnmarkierung auf eine Fahrbahn aus gummielastischem Aufbaumaterial umfasst die folgenden Maßnahmen:
a) Aufbringen eines Acrylat-basierenden Haftvermittlers auf einen zu markierenden Bereich der Fahrbahnoberfläche;
b) vor dem Aushärten des Haftvermittlers Aufbringen von ein- oder mehrkomponentigem, Polyurethanharz-basierendem Beschichtungsmaterial auf den Haftvermittler.

## Beschreibung

Die vorliegende Erfindung betrifft ein Verfahren zum Aufbringen einer Fahrbahnmarkierung auf eine Fahrbahn aus gummielastischem Aufbaumaterial.

Im Bereich von Gleisübergängen ist es bekannt, die an die Schienen einer Gleisanlage heranführenden Bereiche einer Fahrbahn nicht in Beton- oder Asphaltbauweise bereitzustellen, sondern vorgefertigte Belagplatten aus gummielastischem Aufbaumaterial angrenzend an die Schienen zu positionieren und auch zu verankern. Derartige Belagplatten werden beispielsweise aus durch Recycling gewonnenem Altgummigranulatmaterial, also grundsätzlich aus Elastomermaterial aufgebaut, das hinsichtlich seiner Elastizitätseigenschaften demjenigen von gummiartigem Material entspricht. Die EP 0 904 463 B1 offenbart eine mit derartigen Belagplatten aufgebaute Gleisübergangseinrichtung.

Ein Problem beim Aufbringen von Fahrbahnmarkierungen auf derartige Fahrbahnbereiche ist, dass allein auf Grund der Elastizität dieser Fahrbahnbereiche, welche deutlich höher ist als die Elastizität von nichtgummielastischem Aufbaumaterial, wie z.B. Asphalt oder Beton, bei der beim Überfahren auftretenden Verformung herkömmliches Fahrbahnmarkierungsmaterial sich von der Fahrbahnoberfläche ablöst. Auch die materialschlüssige Anbindung des herkömmlicherweise verwendeten Fahrbahnmarkierungsmaterials an die aus Elastomermaterial aufgebauten Fahrbahnbereiche entspricht nicht derjenigen, wie sie bei den allgemein eingesetzten Fahrbahnmaterialien, wie zum Beispiel Beton oder Asphalt, erzielbar ist.

Es ist die Aufgabe der vorliegenden Erfindung, ein Verfahren zum Aufbringen einer Fahrbahnmarkierung auf eine Fahrbahn aus gummielastischem Aufbaumaterial vorzusehen, mit welchem in einfacher Art und Weise eine zuverlässig haltende Fahrbahnmarkierung erzeugt werden kann.

Erfindungsgemäß wird diese Aufgabe gelöst durch ein Verfahren zum Aufbringen einer Fahrbahnmarkierung auf eine Fahrbahn aus gummielastischem Aufbaumaterial, umfasssend die Maßnahmen:
a) Aufbringen eines Acrylat-basierenden Haftvermittlers auf einen zu markierenden Bereich der Fahrbahnoberfläche;
b) vor dem Aushärten des Haftvermittlers Aufbringen von ein- oder mehrkomponentigem, Polyurethanharz-basierendem Beschichtungsmaterial auf den Haftvermittler.

Durch das mehrstufige bzw. mehrschichtige Aufbringen wird es möglich, den im Bereich gummielastischer Fahrbahnen auftretenden Anforderungen einerseits hinsichtlich der Anpassbarkeit des Markierungsmaterials und andererseits hinsichtlich der Erzielung einer intensiven und langhaltenden materialschlüssigen Verbindung Rechnung zu tragen. Es hat sich gezeigt, dass durch einen Acrylat-basierenden Haftvermittler eine sehr stabile Verbindung zwischen dem die eigentliche farbige Markierung berteitstellenden Beschichtungsmaterial und dem gummielastischen Untergrund erzielbar ist, wobei auf Grund des Aufbringens des Beschichtungsmaterials noch vor dem Aushärten des Haftvermittlers auch eine sehr intensive materialschlüssige Verbindung zwischen dem Haftvermittler selbst und dem Beschichtungsmaterial erzielbar ist.

Als besonders vorteilhaft hat sich erwiesen, wenn der Haftvermittler Cyanacrylat-basierend ist, insbesondere mit Ethyl-2-Cyanacrylat aufgebaut ist.

Um beim beim Aufbringen des Haftvermittlers dafür zu sorgen, dass dieser sich auch an die im Bereich gummielastischer Fahrbahnbereiche im allgemeinen vorhandene Strukturierung im Oberflächenbereich anpasst, wird weiter vorgeschlagen, dass der Haftvermittler vor dem Aushärten eine Viskosität bei einer Temperatur von etwa 25°C im Bereich von 2000 cP bis 3000 cP, vorzugsweise 2200 cP bis 2800 cP aufweist.

Die gewünschte farbliche Einstellung der Fahrbahnmarkierung kann dadurch erzielt werden, dass die Maßnahme b) das Einbringen von Farbpigmentmaterial in das Beschichtungsmaterial vor Aufbringung auf den Haftvermittler umfasst, wobei insbesondere in Verbindung mit dem Polyurethanharz-basierenden Beschichtungsmaterial der Einsatz von Polyol-basierendem Farbpigmentmaterial besonders vorteilhaft ist.

Bei Fahrbahnmarkierungen besteht die Anforderung, dass diese auch in der Nacht gut sichtbar sein müssen. Es wird daher vorgeschlagen, dass die Maßnahme b) das Einbringen von Reflektorpartikelmaterial in das Beschichtungsmaterial vor Aufbringung auf den Haftvermittler umfasst.

Alternativ oder zusätzlich kann vorgesehen sein, dass nach Durchführung der Maßnahme b) vor dem Aushärten des Beschichtungsmaterials Reflektorpartikelmaterial auf das Beschichtungsmaterial aufgebracht wird. Als besonders einfach herstellbares und auch leicht handhabbares Reflektorpartikelmaterial hat sich Glaspartikelmaterial erwiesen.

Bei der erfindungsgemäßen Vorgehensweise zum Aufbringen einer Fahrbahnmarkierung auf eine Fahrbahn aus gummielastischem Aufbaumaterial, beispielsweise aufgebaut mit in einer Mehrzahl von entlang einer Gleisanlage positionierten Belagplatten bei Gleisübergängen, wird zunächst derjenige Bereich, in welchem eine farbige Markierung aufzubringen ist, abgegrenzt, beispielsweise von diesen Bereich umgebendem Abdeckmaterial, wie z.B. Klebestreifen, Abdeckblenden oder dergleichen. Es wird auf die ggf. auch strukturierte Fahrbahnoberfläche dann zunächst ein Acrylat-basierender Haftvermittler aufgebracht. Als besonders geeignet hat sich hierzu ein unter dem Handelsnamen "*WIKO Super Glue 2500"* vertriebener Klenstoff erwiesen. Dieser als Ethyl-2-Cyanacrylat Monomer aufgebaute Klebstoff ist in der Lage, im Übergang zur Oberfläche des Ela-stomermaterials der Fahrbahn bei guter Anpassbarkeit an die Oberflächenstrukturierung eine sehr starke and langhaltende, materialschlüssige Verbindung herzustellen.

Noch vor dem Aushärten dieses Haftvermittlers wird ein Beschichtungsmaterial auf diesen Bereich aufgebracht, wie es beispielsweise auch als Bootsbeschichtung zur Beschichtung von Kunststoff-Bootrümpfen eingesetzt wird. Dieses Beschichtungsmaterial ist Polyurethanharz-basierend und kann beispielsweise mit aliphatischem Polyisocyanat aufgebaut sein.

Um für die Fahrbahnmarkierung eine gewünschte Farbe zu erlangen, wird in das Beschichtungsmaterial Polyol-basierendes Pigmentmaterial eingemischt. Das Einmischen des Farbpigmentmaterials in das Polyurethanharzbasierende Beschichtungsmaterial erfolgt selbstverständlich noch vor dem Aufbringen desselben auf den Haftvermittler bzw. bereits bevor der Haftvermittler auf den zu markierenden Fahrbahnbereich aufgetragen wird. Da das Beschichtungsmaterial mit dem darin enthaltenen Farbpigmentmaterial vor dem vollständigen Aushärten des Haftvermittlers aufgebracht wird, wird hier eine im Angrenzungsbereich sehr intensive und zu hoher Verbindungsfestigkeit führende, materialschlüssige Verbindung dieser beiden Materialien bzw. Materiallagen erreicht.

Um eine derartige Fahrbahnmarkierung auch bei Dunkelheit gut erkennen zu können, wird in das Beschichtungsmaterial Reflektorpartikelmaterial eingebracht, wozu beispielsweise Glaspartikel genutzt werden können. Diese Partikel können vor dem Auftragen des Beschichtungsmaterials in dieses eingemischt werden, um eine sehr gute volumenmäßige Durchmischung zu erlangen. Alternativ oder zusätzlich ist es möglich, das Reflektorpartikelmaterial erst dann aufzubringen, also beispielsweise aufzustreuen, nachdem das Beschichtungsmaterial mit dem darin enthaltenen Farbpigmentmaterial auf den noch nicht ausgehärteten Haftvermittler aufgebracht worden ist, selbstverständlich jedoch noch bevor das Beschichtungsmaterial selbst ausgehärtet ist.

Mit der erfindungsgemäßen Vorgehensweise wird es möglich, auch in Fahrbahnbereichen, die im Vergleich zu Beton- oder Asphaltmaterial eine vergleichsweise hohe Elastizität aufweisen, wie dies insbesondere im Bereich von Bahnübergängen der Fall sein kann, eine Markierung aufzubringen, die auch unter Belastung und dabei auftretender Verformung der Fahrbahn zuverlässig hält. Durch die Möglichkeit, das Farbpigmentmaterial hinsichtlich der Farbe frei auszuwählen, kann die Fahrbahnmarkierung in jeder beliebigen bzw. erforderlichen Farbe aufgebracht werden.

## Patentansprüche

1. Verfahren zum Aufbringen einer Fahrbahnmarkierung auf eine Fahrbahn aus gummielastischem Aufbaumaterial, umfasssend die Maßnahmen:
a) Aufbringen eines Acrylat-basierenden Haftvermittlers auf einen zu markierenden Bereich der Fahrbahnoberfläche;
b) vor dem Aushärten des Haftvermittlers Aufbringen von ein- oder mehrkomponentigem, Polyurethanharz-basierendem Beschichtungsmaterial auf den Haftvermittler.

2. Verfahren nach Anspruch 1, **dadurch gekennzeichnet, dass** der Haftvermittler Cyanacrylat-basierend ist.

3. Verfahren nach Anspruch 2, **dadurch gekennzeichnet, dass** der Haftvermittler mit Ethyl-2-Cyanacrylat aufgebaut ist.

4. Verfahren nach einem der Ansprüche 1 bis 3, **dadurch gekennzeichnet, dass** der Haftvermittler vor dem Aushärten eine Viskosität bei 25°C im Bereich von 2200 - 2800 cP aufweist.

5. Verfahren nach einem der Ansprüche 1 bis 4, **dadurch gekennzeichnet, dass** die Maßnahme b) das Einbringen von Farbpigmentmaterial in das Beschichtungsmaterial vor Aufbringung auf den Haftvermittler umfasst.

6. Verfahren nach Anspruch 5, **dadurch gekennzeichnet, dass** das Farbpigmentmaterial Polyol-basierend ist.

7. Verfahren nach einem der Ansprüche 1 bis 6, **dadurch gekennzeichnet, dass** die Maßnahme b) das Einbringen von Reflektorpartikelmaterial in das Beschichtungsmaterial vor Aufbringung auf den Haftvermittler umfasst.

8. Verfahren nach einem der Ansprüche 1 bis 7, **dadurch gekennzeichnet, dass** nach Durchführung der Maßnahme b) vor dem Aushärten des Beschichtungsmaterials Reflektorpartikelmaterial auf das Beschichtungsmaterial aufgebracht wird.

9. Verfahren nach Anspruch 7 oder 8, **dadurch gekennzeichnet, dass** das Reflektorpartikelmaterial Glaspartikel umfasst.
